# EUROPÄISCHE PATENTSCHRIFT

(11) **EP 1 657 375 B1**
(45) Veröffentlichungstag und Bekanntmachung des Hinweises auf die Patenterteilung: **27.04.2011**
(21) Anmeldenummer: 05077607.9
(22) Anmeldetag: 14.11.2005
(51) Int. Cl.: E04B 1/82, E04B 1/84

(54) **Schalldämmplatte**
Insulating plate
Panneau d' isolation phonique

(30) Priorität: 16.11.2004 DE 102004056131
(43) Veröffentlichungstag der Anmeldung: 17.05.2006
(73) Patentinhaber: Kronotec AG, 6006 Luzern (CH)
(72) Erfinder: Pohlmann, Cevin Marc Dr., 22955 Hoisdorf (DE)
(74) Vertreter: Bröseke, Eribert

(56) Entgegenhaltungen:
- EP-A- 0 971 080
- WO-A-95/34722
- DE-A1- 10 056 829
- PATENT ABSTRACTS OF JAPAN Bd. 2000, Nr. 05, 14. September 2000 (2000-09-14) & JP 2000 034800 A (SHIMIZU CORP), 2. Februar 2000 (2000-02-02)

## Beschreibung

Die Erfindung betrifft eine Schalldämmplatte zur Bildung von Laminatböden oder Parkett, als Bodenausgleichsplatte auf großen Flächen und als Wand- und Deckenelement für den Trockenbau.

Es sind die unterschiedlichsten Platten beispielsweise für die Trittschalldämmung bekannt. Sie bestehen beispielsweise aus Steinwolle, die durch ein Bindemittel zusammengehalten werden. Die Festigkeit dieser Platten ist gering. Wird der Festigkeitswert erhöht, geschieht das durch Zusatz größerer Mengen an Bindemittel oder Füllstoffe mit hohen spezifischen Gewichten. Damit nimmt aber die Schalldämmwirkung ab.

So ist durch die DE-Gebrauchsmusterschrift 201 00 632 U1 eine Schalldämmplatte für Laminatböden oder andere Anwendungen bekannt, die aus einem Gemisch von unbeleimten Naturrohstofffasern, wie Holzfasern, einem Bindemittel, wie thermoplastischen Klebefasern und hochdichten Füllstoffen mit einem spezifischen Gewicht größer als 2000 kg/m³ bestehen. Die hochdichten Füllstoffe werden so in die Schalldämmplatte eingelagert, dass sie einen kontinuierlichen Übergang ihrer Dichte von der einen großflächigen zur anderen großflächigen Seite der Matte gewährleisten. Durch das hohe spezifische Gewicht der Füllstoffe in der Schalldämmplatte ist diese wenig elastisch.

Des Weiteren ist aus der DE 100 56 829 ein Verfahren zur Herstellung von Dämmstoffplatten bzw. -matten aus Holzfasern und Kunststofffasern bekannt, bei dem die Platten eine gleichmäßige Dichte von einer zur anderen großflächigen Seite aufweisen. Sie werden aus einer Mischung von Holzfasern mit Kunststoffbindefasern und Stützfasern erhalten. Die erhaltenen Platten besitzen Raumgewichte von 20 kg/m3 bis 170 kg/m3.

Der Erfindung liegt die Aufgabe zu Grunde, eine schalldämmende Platte zur Bildung von Laminatböden, als Bodenausgleichsplatte oder für den Trockenbau zu schaffen, die neben einer hohen Schalldämmung, insbesondere Trittschalldämmung auch eine ausreichende Drucksteifigkeit besitzt und in Ihrer Herstellung einfach ist.

Erfindungsgemäß weist die Schalldämmplatte von der einen großflächigen zur anderen großflächigen Seite einen kontinuierlichen Übergang in ihrer Dichte auf und besteht aus einem Gemisch aus unbeleimten Holzfasern, einer thermoplastischen Kunstharzklebefaser und/oder einer Stützfaser und einem Mischkunststoff, wie er bei der Aufarbeitung von Kunststoffteilen aus dem dualen System anfällt. Der Begriff "duales System" steht für einen Recyclingkreislauf von Kunststoffen mit Wiederverwertung.

Als Stützfasern, die die Kunstharzklebefasern ganz oder teilweise ersetzen, werden solche aus Pflanzen wie beispielsweise Hanf, Stroh, Flachs, Sisal oder jeder anderen Pflanze mit langen Fasern eingesetzt. Alternativ oder kumulativ zu den Pflanzenfasern können selbstverständlich Kunstharzfasern eingesetzt werden, z. B. Polyamidfasern. Die eingesetzten Stützfasern besitzen eine Länge von 1 bis 20 cm, vorzugsweise 13 bis 15 cm.

Die erfindungsgemäße Schalldämmplatte weist eine Rohdichte von 130 - 260 kg/m³ auf und wird in Dicken von 3 bis 20 mm gefertigt. Vorzugsweise liegt bei Platten mit Dicken von 3 - 6 mm die Rohdichte bei 200 - 260 kg/m3 und bei Platten mit Dicken von 7 - 20 mm die Rohdichte bei 130 - 220 kg/m3.

Dabei weist das Ausgangsmaterial vorteilhaft eine Zusammensetzung von
50 bis 60 % an unbeleimten Holzfasern,
8 bis 10 % Bindemittel und/oder Stützfasern und
42 bis 30 % an Mischkunststoffen auf.

Die eingesetzten unbeleimten Holzfasern weisen eine Länge von 0,3 bis 1,2 cm, vorzugsweise 0,7 bis 1 cm und insbesondere von 0,85 bis 0,95 cm auf, wobei Anteile von einer geringeren Faserlänge (Stäube) nicht stören.

Zur Verbesserung der erfindungsgemäßen Schalldämmplatte hinsichtlich Feuchtigkeitsbeständigkeit und Flammschutz können die unbehandelten Holzfasern mit einem Hydrophobierungsmittel und/oder Flammschutzmittel versehen werden.

Das Bindemittel besteht vorzugsweise aus thermoplastischen Kunststoffharzen in Form von Klebefasern. Besonders geeignet sind solche Bindemittel, die einen Fließübergangsbereich von 70 bis 190°C besitzen.

Werden die Kunstharzklebefasern ganz oder teilweise durch Stützfasern ersetzt, werden bei den Mischkunststoffen aus dem dualen System solche ausgewählt, die einen größeren Anteil an klebenden Kunstharzen enthalten.

Durch die vom Ofen zugeführte Wärme werden dann ausreichende Mengen des Mischkunststoffes in den Fliesübergangsbereich versetzt und übernehmen die Funktion des Bindemittels.

Der Mischkunststoffanteil aus dem dualen System weist eine Partikelgröße von 2,0 bis 0,1 mm vorzugsweise von 0,2 mm auf.

Zur Herstellung der erfindungsgemäßen Schalldämmplatte werden die Bestandteile in der gewünschten Zusammensetzung gemischt und aus einem Vorratsbehälter z. B. durch ein Gebläse auf ein kontinuierlich bewegtes Transportband aufgeblasen. Durch das unterschiedliche spezifische Gewicht der Holzfasern bzw. des Mischkunststoffes haben die feinen Holzpartikel eine längere Flugbahn und setzen sich an der Oberfläche der auf das Transportband aufgetragenen Masse ab. Die Mischkunststoffpartikel führen eine kürzere Flugbahn aus und bilden die Unterschicht der entstehenden kontinuierlichen Materialbahnen. Dabei entsteht kein abgehackter Übergang von einem Material zum anderen, sondern die Dichte der Materialbahn nimmt kontinuierlich von oben nach unten zu.

Sollte ein besonderer Schichtaufbau, z. B. über die Breite der Materialbahn gewünscht werden, können weitere Vorratsbehälter über dem Transportband angeordnet werden. Dabei können in diesen Vorratsbehältern die aufzutragenden Massen gleiche wie auch unterschiedliche Zusammensetzungen besitzen.

Die Schichtdicke der herzustellenden Schalldämmplatten kann durch unterschiedliche Geschwindigkeiten des Transportbandes, durch die Menge an aufgetragener Masse pro Zeiteinheit oder durch Kombination beider vorgenannter Maßnahmen eingestellt werden.

Nach dem Auftragen der Masse wird das Transportband durch einen Ofen geführt, der ausreichende hohe Temperaturen aufweist, damit der Fließübergangsbereich der eingesetzten Klebefasern erreicht wird. Durch das Flüssigwerden des Bindemittels wird der gewünschte Zusammenhalt der Bestandteile erzielt. Nach der Heizzone folgt eine Kühlzone, in der die Klebefasern aushärten. Danach wird der Materialstrom in die gewünschte Länge geschnitten und die Platte steht zum Einsatz bereit.

Werden die thermoplastischen Bindemittel ganz oder teilweise durch Stützfasern aus Pflanzenfasern ersetzt, werden die Ofentemperaturen so gesteuert, dass der Fliesübergangsbereich für Teile des Mischkunststoffes erreicht wird.

Zusätzlich können vor der Aushärtung des Kunstharzes eine oder beide großflächigen Seiten der Platte mit einer Druckrolle mit Strukturen versehen werden. Damit schafft man eine verbesserte Oberfläche für das Verkleben als auch das Verputzen der erfindungsgemäßen Platte, sofern sie z. B. als Wand- oder Deckenelemente im Trockenbau eingesetzt werden. Eine Variante bei der Plattenherstellung sieht vor, dass anstelle der Strukturierung der großflächigen Seiten der Platten auf diese ein- oder beidseitig ein Faservlies aufgetragen wird. Auch dadurch wird eine verbesserte Oberfläche für die weitere Verarbeitung erreicht.

Selbstverständlich ist es auch möglich, die eine großflächige Seite der Platte zu strukturieren und auf der anderen großflächigen Seite ein Vlies aufzutragen.

Durch diese Maßnahmen wird ein universaler Einsatz der erfindungsgemäßen Schalldämmplatten möglich.

Bei der fertigen Platte besteht die Oberseite zu einem Großteil aus Holzfasern, wodurch die "Holzoptik" der Schalldämmplatte erhalten bleibt. Die Holzfasern zeichnen für die gute Schalldämmung, insbesondere Trittschalldämmung verantwortlich, während sich die Mischkunststoffanteile auf der unteren Seite der Schalldämmplatte angereichert haben und ihr dadurch eine gute Drucksteifigkeit verleihen. Allein durch den gewünschten Schichtenaufbau wird eine Erhöhung der Druckfestigkeit von 120 bis 200 % erreicht.

Bei Laminatböden kann die erfindungsgemäße Schalldämmplatte mit der dichteren Seite vollflächig oder streifenförmig auf das Laminat aufgeklebt werden. Durch den erhöhten Anteil an Mischkunststoffen an der befestigten Seite der Trittschalldämmplatte ist das erhaltene Produkt ausreichend drucksteif und die Verklebung problemlos möglich.

Bei einer anderen Anwendungsart kann die erfindungsgemäße Schalldämmplatte als Verlegeplatte auf den Fußboden ausgelegt werden, auf welcher dann der Fußbodenbelag aufgelegt wird.

Ein weiteres Anwendungsgebiet der erfindungsgemäßen Schalldämmplatte, insbesondere bei Platten mit Dicken über 8 mm, ergibt sich im Trockenbau. Dabei können die Platten z. B. als Bodenausgleichsplatte auf großflächige Bauelemente, wie Spann-, OSB- oder Fermacellplatten aufgeklebt werden.

Ebenso sind die erfindungsgemäßen Schalldämmplatten als Wand- und Deckenelemente einsetzbar. Hier kommen insbesondere solche Platten zum Einsatz, die ein- oder beidseitig auf der großflächigen Seite ein Vlies tragen, bzw. deren großflächige Seiten bei der Herstellung strukturiert wurden. Die Erfindung soll nachfolgend anhand der Zeichnungen näher erläutert werden.

Es zeigen:
- Fig. 1: eine Fußbodenplatte mit der erfindungsgemäßen Schalldämmplatte als Unterschicht;
- Fig. 2: einen Ausschnitt A der erfindungsgemäßen Schalldämmplatte aus Figur 1;
- Fig. 3: ein Rohdichteprofil der erfindungsgemäßen Schalldämmplatte.

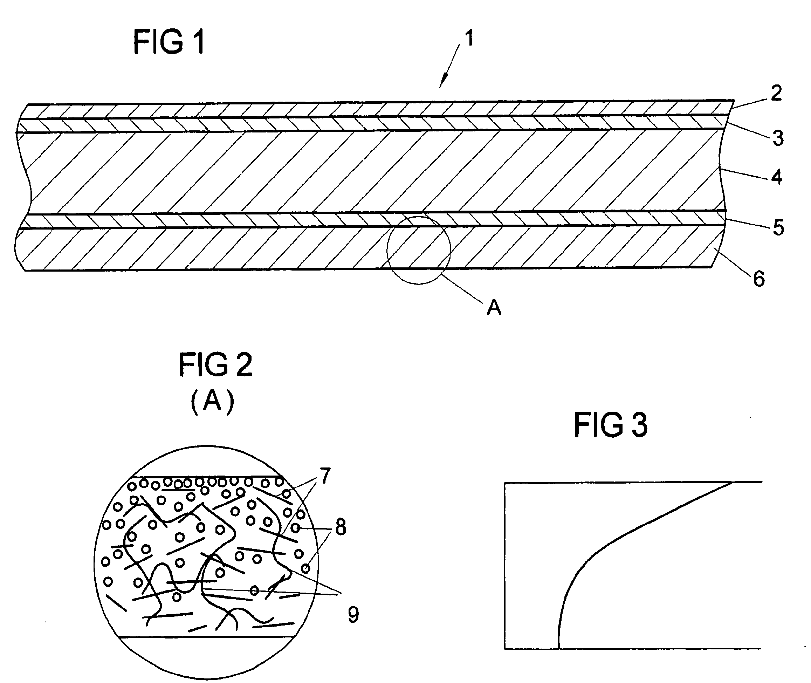

Wie aus Figur 1 zu entnehmen, besteht die Fußbodenplatte 1 aus der abriebfesten Schicht 2, der Dekorschicht 3, der Trägerplatte 4, beispielsweise einer HDF- oder MDF-Platte, dem Gegenzug 5 und der erfindungsgemäßen Schalldämmplatte 6. Den Aufbau der erfindungsgemäßen Schalldämmplatte 6 von einer großflächigen Seite zur anderen großflächigen Seite zeigt die Figur 2. Es ist zu ersehen, dass der Anteil der Holzfasern 7 bzw. der Partikel 8 des Mischkunststoffes aus dem dualen System jeweils von einer Seite zur anderen Seite ab- bzw. zunimmt. Dagegen sind die Bindemittelfasern bzw. die Stützfaser 9 gleichmäßig über die gesamte Strecke zwischen den beiden großflächigen Seiten verteilt.

Aus der Figur 3 ist zu ersehen, dass die Rohdichte mit der Abnahme des Anteiles an Mischkunststoffen 8 ebenfalls abnimmt.

## Patentansprüche

1. Schalldämmplatte für Laminatböden oder andere Anwendungen, **gekennzeichnet durch** einen kontinuierlichen Übergang ihrer Dichte von der einen großflächigen zur anderen großflächigen Seite der Platte, bestehend aus einem Gemisch von 50 bis 60 % unbeleimten Holzfasern, wahlweise mit einem Hydrophobierungsmittel und/oder Flammschutzmittel versehen, 8 bis 10% Bindemittel aus thermoplastischen Klebefasern und/oder Stützfasern und 42 bis 30% Mischkunststoff, wie er bei der Aufarbeitung von Kunststoffteilen aus dem dualen System anfällt.

2. Schalldämmplatte nach Anspruch 1, **gekennzeichnet durch** Stützfasern aus Pflanzenfasern, wie Hanf, Stroh, Flachs, Sisal u. ä. oder Kunstharzfasern, wie Polyamidfasern.

3. Schalldämmplatte nach Anspruch 1 und 2, **gekennzeichnet durch** Stützfasern mit Längen von 1 bis 20 cm, vorzugsweise 13 bis 15 cm.

4. Schalldämmplatte nach mindestens einem der Ansprüche 1 bis 3, **gekennzeichnet durch** unbeleimte Holzfasern mit einer Partikelgröße von 0,3 bis 1,2 cm vorzugsweise 0,7 bis 1 cm und insbesondere 0,85 bis 0,95 cm und einem Mischkunststoff mit einer Partikelgröße von 2,0 bis 0,1 mm, vorzugsweise 0,2 mm.

5. Schalldämmplatte nach mindestens einem der Ansprüche 1 bis 4, **gekennzeichnet durch** eine Dicke von 3 bis 20 mm und eine Rohdichte von 130 bis 260 kg/m³.

6. Schalldämmplatte nach mindestens einem der Ansprüche 1 bis 4, **gekennzeichnet durch** eine Dicke von 3 bis 6 mm und einer Rohdichte von 200 bis 260 kg/m³.

7. Schalldämmplatte nach mindestens einem der Ansprüche 1 bis 4, **gekennzeichnet durch** eine Dicke von 7 bis 20 mm und einer Rohdichte von 130 bis 220 kg/m³.

8. Schalldämmplatte nach mindestens einem der Ansprüche 1 bis 7, **gekennzeichnet durch** ein zusätzliches Faservlies auf einer oder beiden großflächigen Seiten der Platte.

9. Schalldämmplatte nach mindestens einem der Ansprüche 1 bis 8, **gekennzeichnet durch** eine zusätzliche Strukturierung einer oder beider großflächigen Seiten der Platte.

10. Schalldämmplatte nach mindestens einem der Ansprüche 1 bis 9, **gekennzeichnet durch** ein Faservlies auf einer großflächigen Seite und einer Strukturierung auf der anderen großflächigen Seite der Platte.

11. Schalldämmplatte nach mindestens einem der Ansprüche 1 bis 10, erhalten durch Aufblasen eines Gemisches der Ausgangsprodukte unbeleimte Holzfasern, Mischkunststoffe aus dem dualen System und Bindemittel und/oder Stützfasern in gewünschter Zusammensetzung aus einem oder mehreren Vorratsbehältern auf ein kontinuierlich bewegtes Transportband, aushärten lassen in einem Ofen mit Temperaturen im Fließübergangsbereich der eingesetzten thermoplastischen Klebefasern als Bindemittel bzw. Teilen der Mischkunststoffe und Abtrennung von Platten in gewünschter Länge.

12. Schalldämmplatte nach mindestens einem der Ansprüche 1 bis 10, erhalten durch Aufblasen eines Gemisches der Ausgangsprodukte unbeleimte Holzfasern, wahlweise mit einem Hydrophobierungsmittel und/oder einem Flammschutzmittel versehen, Mischkunststoffe aus dem dualen System, Klebefasern und/oder Stützfasern in gewünschter Zusammensetzung aus einem oder mehreren Vorratsbehältern auf ein kontinuierlich bewegtes Transportband, eventuelles Strukturieren und/oder Aufbringen eines Faservlieses auf eine oder beide großflächigen Seiten des Massestromes, Aushärten lassen in einem Ofen mit Temperaturen im Fließübergangsbereich der eingesetzten thermoplastischen Klebefasern als Bindemittel bzw. Teilen der Mischkunststoffe und Abtrennen von Platten in gewünschter Länge.

## Claims

1. A sound-insulating board for laminate floors or other applications, **characterized by** a continuous transition in its density from the one large-area side to the other large-area side of the board, comprising a mixture of 50 to 60% unglued wood fibers, optionally provided with a hydrophobicizing agent and/or flame prevention agent, 8 to 10% of a binder of thermoplastic adhesive fibers and/or supporting fibers and 42 to 30% of a mixed plastic, such as arises from the dual system during the recovery of plastic parts.

2. The sound-insulating board as claimed in claim 1, **characterized by** supporting fibers of plant fibers, such as hemp, straw, flax, sisal and the like or synthetic resin fibers, such as polyamide fibers.

3. The sound-insulating board as claimed in claim 1 and 2, **characterized by** supporting fibers that have lengths of 1 to 20 cm, preferably 13 to 15 cm.

4. The sound-insulating board as claimed in at least one of claims 1 to 3, **characterized by** unglued wood fibers with a particle size from 0.3 to 1.2 cm, preferably 0.7 to 1 cm and in particular 0.85 to 0.95 cm, and a mixed plastic with a particle size of 2.0 to 0.1 mm, preferably 0.2 mm.

5. The sound-insulating board as claimed in at least one of claims 1 to 4, **characterized by** a thickness of 3 to 20 mm and a bulk density of 130 to 260 kg/m³.

6. The sound-insulating board as claimed in at least one of claims 1 to 4, **characterized by** a thickness of 3 to 6 mm and a bulk density of 200 to 260 kg/m³.

7. The sound-insulating board as claimed in at least one of claims 1 to 4, **characterized by** a thickness of 7 to 20 mm and a bulk density of 130 to 220 kg/m³.

8. The sound-insulating board as claimed in at least one of claims 1 to 7, **characterized by** an additional fiber nonwoven on one or both large-area sides of the board.

9. The sound-insulating board as claimed in at least one of claims 1 to 8, **characterized by** additional structuring of one or both large-area sides of the board.

10. The sound-insulating board as claimed in at least one of claims 1 to 9, **characterized by** a fiber nonwoven on one large-area side and structuring on the other large-area side of the board.

11. The sound-insulating board as claimed in at least one of claims 1 to 10, obtained by blowing a mixture of the initial products comprising unglued wood fibers, mixed plastics from the dual system and binders and/or supporting fibers in the desired composition out of one or more storage containers onto a continuously moved transport belt, and allowing it to harden in an oven with temperatures in the flow transition range of the thermoplastic adhesive fibers used as binders or parts of the mixed plastics, and cutting off boards in the desired length.

12. The sound-insulating board as claimed in at least one of claims 1 to 10, obtained by blowing a mixture of the initial products comprising unglued wood fibers, optionally provided with a hydrophobicizing agent and/or a flame prevention agent, mixed plastics from the dual system, adhesive fibers and/or supporting fibers in the desired composition out of one or more storage containers onto a continuously moved transport belt, possibly structuring and/or applying a nonwoven fabric to one or both large-area sides of the mass stream, allowing it to harden in an oven with temperatures in the flow transition range of the thermoplastic adhesive fibers used as binders or parts of the mixed plastics, and cutting off boards in the desired length.

## Revendications

1. Panneau d'isolation phonique pour sols stratifiés ou autres applications, **caractérisé par** une transition continue de sa densité d'un côté à grande surface à l'autre côté à grande surface du panneau, constitué d'un mélange de 50 à 60 % de fibres de bois non enduites de colle, dotées au choix d'un produit imperméabilisant et/ou pare-flamme, 8 à 10 % de liant formé de fibres adhésives thermoplastiques et/ou fibres support et 42 à 30 % de plastique mixte, comme obtenu lors du traitement d'éléments plastiques issus du système de recyclage.

2. Panneau d'isolation phonique selon la revendication 1, **caractérisé par** des fibres support en fibres végétales, comme le chanvre, la paille, le lin, le sisal, et similaire ou fibres de résine synthétique, comme des fibres de polyamide.

3. Panneau d'isolation phonique selon les revendications 1 et 2, **caractérisé par** des fibres support mesurant de 1 à 20 cm de long, de préférence 13 à 15 cm.

4. Panneau d'isolation phonique selon au moins l'une quelconque des revendications 1 à 3, **caractérisé par** des fibres de bois non enduites de colle avec une taille de particule de 0,3 à 1,2 cm de préférence de 0,7 à 1 cm et en particulier de 0,85 à 0,95 cm et un plastique mixte avec une taille de particule de 2,0 à 0,1 mm, de préférence 0,2 mm.

5. Panneau d'isolation phonique selon au moins l'une quelconque des revendications 1 à 4, **caractérisé par** une épaisseur de 3 à 20 mm et une densité apparente de 130 à 260 kg/m³_{.}

6. Panneau d'isolation phonique selon au moins l'une quelconque des revendications 1 à 4, **caractérisé par** une épaisseur de 3 à 6 mm et une densité apparente de 200 à 260 kg/m³.

7. Panneau d'isolation phonique selon au moins l'une quelconque des revendications 1 à 4, **caractérisé par** une épaisseur de 7 à 20 mm et une densité apparente de 130 à 220 kg/m³.

8. Panneau d'isolation phonique selon au moins l'une quelconque des revendications 1 à 7, **caractérisé par** un non-tissé supplémentaire sur un ou les deux côtés à grande surface du panneau.

9. Panneau d'isolation phonique selon au moins l'une quelconque des revendications 1 à 8, **caractérisé par** une structuration supplémentaire d'un ou des deux côtés à grande surface du panneau.

10. Panneau d'isolation phonique selon au moins l'une quelconque des revendications 1 à 9, **caractérisé par** un non-tissé sur un côté à grande surface et une structuration sur l'autre côté à grande surface du panneau.

11. Panneau d'isolation phonique selon au moins l'une quelconque des revendications 1 à 10, obtenu par soufflage d'un mélange des produits de départ fibres de bois non enduites de colle, plastiques mixtes issus du système de recyclage et liants et/ou fibres support selon la composition souhaitée à partir d'un ou de plusieurs réservoirs sur une bande transporteuse à mouvement continu, durcissement dans un four à des températures situées dans la plage de liquéfaction des fibres adhésives thermoplastiques employées comme liant ou éléments des plastiques mixtes et découpe de panneaux à la longueur souhaitée.

12. Panneau d'isolation phonique selon au moins l'une quelconque des revendications 1 à 10, obtenu par soufflage d'un mélange des produits de départ fibres de bois non enduites de colle, dotées au choix d'un produit imperméabilisant et/ou d'un pare-flammes, plastiques mixtes issus du système de recyclage, fibres adhésives et/ou fibres support selon la composition souhaitée à partir d'un ou de plusieurs réservoirs sur une bande transporteuse à mouvement continu, structuration éventuelle et/ou application d'un non-tissé sur un ou les deux côtés à grande surface du flux de masse, durcissement dans un four à des températures situées dans la plage de liquéfaction des fibres adhésives thermoplastiques employées comme liant ou éléments des plastiques mixtes et découpe de panneaux à la longueur souhaitée.
